# EUROPEAN PATENT APPLICATION

(11) **EP 3 534 342 A1**
(43) Date of publication of application: **04.09.2019**
(21) Application number: 16915917.5
(22) Date of filing: 27.10.2016
(51) Int. Cl.: G08B 5/00, F21S 2/00, F21V 23/00, G09G 5/00, H05B 37/02

(54) **SIGNAL INDICATOR LAMP SYSTEM AND SIGNAL INDICATOR LAMP THEREFOR**

(71) Applicant: Patlite Corporation, Osaka-shi, Osaka 541-0056 (JP)
(72) Inventor: TAKATA, Ryuzo, Osaka-shi Osaka 541-0056 (JP); SUYAMA, Yojiro, Osaka-shi Osaka 541-0056 (JP)
(74) Representative: Witte, Weller & Partner Patentanwälte mbB
(86) International application number: PCT/JP2016/081921
(87) International publication number: WO 2018/078772

(57) **Abstract**

A plurality of signal display lamps 1A to 1E are communicably connected together through a network 3. Each of the signal display lamps 1A to 1E includes a display portion 12 capable of performing a variable display. Each of the signal display lamps 1A to 1E is capable of performing a mirroring operation in addition to being capable of performing a variable display in the display portion 12 in response to an input signal that is input from input signal lines 8A to 8E. For example, in the signal display lamp 1A, any of the signal display lamps 1B to 1E is selected, and its display state can be simulated. Each of the mirroring source signal display lamps 1B to 1E can be selected by giving a selective command signal from a selective-command-signal generating device 60 connected to the input signal line 8 of the signal display lamp 1A. The selective command of the mirroring source signal display lamp 1 may be given to the signal display lamp 1A from an information-processing terminal device 10 through the network 3.

## Description

### TECHNICAL FIELD

The present invention relates to a signal display lamp system that has a plurality of signal display lamps communicating with each other through a communication network, and relates to a signal display lamp that is used in the signal display lamp system.

### BACKGROUND ART

A signal display lamp is used to impart an operational state of a mechanical apparatus, such as a production apparatus, toward its surroundings by means of light. An example of the thus-configured signal display lamp is disclosed in Patent Literature 1. Patent Literature 1 discloses a system in which a plurality of signal display lamps are connected to a network. An information display terminal device is connected to the network. The information display terminal device has the form of a computer including a display device. A plurality of signal display lamps are disposed correspondingly to a plurality of production apparatuses, respectively, and each signal display lamp displays an operational state of a corresponding production apparatus in the form of a signal in accordance with a control signal given from the corresponding production apparatus. Each of the plurality of signal display lamps includes a communication unit, and is connected to the network through the communication unit. The communication unit sends a control signal given from the production apparatus to the network. The information display terminal device collects the control signals through the network, and displays operational states of the plurality of production apparatuses on a display screen.

### CITATION LIST

### Patent Literature

Patent Literature 1: International Publication WO 2014/181423

### SUMMARY OF INVENTION

### Solution to Problem

In this prior art, a configuration is formed so as to display an operational state of the production apparatus on the display screen of the information display terminal device, and an administrator is able to collectively monitor operational states of the plurality of production apparatuses in front of the information display terminal device.

However, the administrator is required to be positioned near the information display terminal device and to face the display screen, and therefore considerable restrictions are imposed on the position of the administrator, and convenience is not necessarily provided, for example, when the administrator simultaneously performs management while being engaged in other operations.

Therefore, the present invention provides a signal display lamp system that has been improved in convenience, and provides a signal display lamp for the signal display lamp system.

### Solution to Problem

The present invention provides a signal display lamp system in which a plurality of signal display lamps each of which includes a display portion are communicably connected together through a communication network. In the signal display lamp system, the plurality of signal display lamps include a simulated-display signal display lamp that operates to simulate display state of another signal display lamp and a signal display lamp other than the simulated-display signal display lamp. The signal display lamp system includes simulated-display-source identifying means for variably identifying any (one or more) of the plurality of signal display lamps except the simulated-display signal display lamp as a simulated-display-source signal display lamp whose display state is simulated in the simulated-display signal display lamp and display-state-information transmitting means for transmitting display-state information corresponding to a display state in the display portion of the simulated-display-source signal display lamp identified by the simulated-display-source identifying means from the simulated-display-source signal display lamp to the simulated-display signal display lamp through the communication network. The simulated-display signal display lamp includes display control means for controlling the display portion included in the simulated-display signal display lamp based on display-state information transmitted by the display-state-information transmitting means.

For example, one or more of the plurality of signal display lamps can be a simulated-display signal display lamp (or lamps). Additionally, one or more of the plurality of signal display lamps can be a signal display lamp (or lamps) other than the simulated-display signal display lamp (or lamps). Additionally, a configuration may be formed in which one or more of the plurality of signal display lamps can be a simulated-display signal display lamp (or lamps). Additionally, a configuration may be formed in which one or more of the plurality of signal display lamps can be a signal display lamp (or lamps) other than the simulated-display signal display lamp (or lamps). In other words, a configuration may be formed in which one or more of the plurality of signal display lamps can be a simulated-display signal display lamp (or lamps) and can be a signal display lamp (or lamps) other than the simulated-display signal display lamp (or lamps).

In the signal display lamp system of the present invention, the plurality of signal display lamps are communicably connected together through the communication network. Additionally, the simulated-display signal display lamp included in the plurality of signal display lamps acquires display-state information of the other signal display lamps, and controls the display portion based on the display-state information, thus making it possible to simulate display state of another signal display lamp. Therefore, a user can recognize display state of another signal display lamp by watching the simulated-display signal display lamp. A display performed by the simulated-display signal display lamp differs from a display on a display screen of an information display terminal device in that it does not require the user to face a display screen near this display screen. In other words, as long as the user can watch the simulated-display signal display lamp, the user can ascertain the display state of the simulated-display signal display lamp from a free position. As a result, restrictions on the position of the user are greatly reduced, and, for example, the user can simultaneously watch the simulated-display signal display lamp and, accordingly, can understand display state of another signal display lamp while being engaged in other operations. This makes it possible to provide a signal lamp display system excellent in convenience.

Additionally, the signal display lamp system includes simulated-display-source identifying means for variably identifying any of the other signal display lamps except the simulated-display signal display lamp as a simulated-display-source signal display lamp. Therefore, the simulated-display-source signal display lamp can be changed. This enables the simulated-display signal display lamp to selectively simulate and display any of the plurality of signal display lamps, and therefore it is possible to allow the simulated-display signal display lamp to simulate states of the plurality of signal display lamps when needed. Convenience is further improved by this feature.

The display-state information may be input information corresponding to an input signal that is input into the simulated-display-source signal display lamp to control the display state of the simulated-display-source signal display lamp, or may be display-state data that directly shows a display state corresponding to the input signal. For example, each signal display lamp may include display-control-information storage means that stores display control information of the display portion corresponding to an input signal or input information. In this case, the signal display lamp system may have a means for writing display control information common to the display-control-information storage means of the plurality of signal display lamps. If the plurality of signal display lamps have display control information common thereto in this way, there is no need to transmit display-state data, and, if input information is transmitted, it is possible to reproduce the display state of the simulated display source in the simulated-display signal display lamp. The display-state data may be data that shows display control information.

The simulated-display-source identifying means may be provided at a simulated-display signal display lamp, or may be provided at a signal display lamp other than the simulated-display signal display lamp, or may be provided at a place on the communication network other than the signal display lamps, e.g., at an information processing device connected to the communication network.

A part of or all of the display-state-information transmitting means may be provided at a signal display lamp whose display state is simulated by the simulated-display signal display lamp, or a part of or all of the display-state-information transmitting means may be provided separately from a signal display lamp. For example, display-state information may be transmitted from one signal display lamp to a simulated-display signal display lamp via an information processing device connected to a communication network.

In one preferred embodiment of the present invention, the signal display lamp system further includes simulated-display-source-selecting-command accepting means for accepting a simulated-display-source selecting command. The simulated-display-source identifying means identifies a signal display lamp corresponding to a simulated-display-source selecting command accepted by the simulated-display-source-selecting-command accepting means as a simulated-display-source signal display lamp.

This configuration makes it possible to identify any of a plurality of signal display lamps as a simulated display source by giving a simulated-display-source selecting command to the simulated-display-source-selecting-command accepting means. This enables a user to, for example, select a simulated-display-source signal display lamp when needed, and to change the simulated-display-source signal display lamp when needed. This makes it possible to further improve convenience.

The simulated-display-source-selecting-command accepting means may be provided at a simulated-display signal display lamp, or may be provided at a signal display lamp other than the simulated-display signal display lamp, or may be provided at a place on the communication network other than the signal display lamp, e.g., at an information processing device connected to the communication network.

In one preferred embodiment of the present invention, the signal display lamp system further includes simulated-display-source-selecting-command generating means for generating the simulated-display-source selecting command. The simulated-display-source-selecting-command generating means may be positioned at a place on a communication network, or may be configured to give a command to the simulated-display-source-selecting-command accepting means through a communication path other than the communication network.

If the simulated-display-source-selecting-command accepting means is provided at a simulated-display signal display lamp, the simulated-display-source-selecting-command generating means may be configured to give a selective command signal to the simulated-display signal display lamp through an input signal line.

The simulated-display-source-selecting-command generating means may be an information processing device connected to the communication network.

In one preferred embodiment of the present invention, at least one of the plurality of signal display lamps includes the simulated-display-source-selecting-command generating means. This makes it possible to provide the signal display lamp with a function to select a simulated display source.

In this case, the simulated-display-source-selecting-command generating means may generate a simulated-display-source selecting command that identifies the signal display lamp including the simulated-display-source-selecting-command generating means as a simulated display source. Consequently, a signal display lamp commands that the signal display lamp itself is a simulated display source, and therefore it is possible to simulate a display state of itself in the simulated-display signal display lamp.

Additionally, in this case, a configuration may be formed in which a signal display lamp including the simulated-display-source-selecting-command generating means includes simulated-display-execution determining means for determining whether a state of the signal display lamp meets a simulated-display execution condition, and in which the simulated-display-source-selecting-command generating means generates the simulated-display-source selecting command if the state of the signal display lamp meets the simulated-display execution condition.

This makes it possible to, when a simulated-display execution condition is satisfied in a signal display lamp, allow this signal display lamp to command that the signal display lamp itself is a simulated display source, hence making it possible to simulate a display state of itself in a simulated-display signal display lamp. For example, if the fact that a predetermined abnormality has occurred is set as a simulated-display execution condition, it is possible to impart an anomalous occurrence by means of the simulated-display signal display lamp. This makes it possible to further improve convenience.

For example, when an abnormality occurs in a signal display lamp, a simulated-display-source selecting command to fix this signal display lamp as a simulated display source may be given from the signal display lamp to a plurality of (for example, all) other signal display lamps. Furthermore, the plurality of signal display lamps that have received the simulated-display-source selecting command may behave as a simulated-display signal display lamp that simulates a display state of the signal display lamp that has generated the simulated-display-source selecting command. Consequently, when an abnormality occurs in one signal display lamp, an anomalous occurrence is imparted by the plurality of (for example, all) other signal display lamps simultaneously. As a result, it is possible to reliably impart the anomalous occurrence to the user.

In one preferred embodiment of the present invention, at least one of the plurality of signal display lamps is configured to send state information of the signal display lamp to the communication network. Additionally, the simulated-display-source identifying means includes simulated-display-execution determining means for determining whether the state information meets a simulated-display execution condition, and identifies a signal display lamp that has sent the state information meeting the simulated-display execution condition as a simulated-display-source signal display lamp.

In this configuration, the simulated-display-source identifying means identifies the simulated-display-source signal display lamp based on the simulated-display execution condition. As a result, the simulated-display-source signal display lamp dynamically changes in accordance with the simulated-display execution condition. For example, the fact that the state information shows a predetermined abnormal state may be set as a simulated-display execution condition. This makes it possible to simulate a display state of the signal display lamp that has reached an abnormal state in the simulated-display signal display lamp. Therefore, it is possible to allow the simulated-display signal display lamp to simulate a display state of any of the signal display lamps when needed, and therefore it is possible to improve convenience.

In this case, the simulated-display signal display lamp may include input-signal accepting means for accepting an input of an input signal, and, when the simulated-display-source identifying means has not identified a simulated-display-source signal display lamp (i.e., when there is not a signal display lamp that sends state information meeting the simulated-display execution condition), the display control means may control the display portion in accordance with an input signal accepted by the input-signal accepting means.

According to this configuration, the simulated-display signal display lamp behaves as a normal signal display lamp that executes a display according to an input signal at a normal time, and simulates display state of another signal display lamp when a simulated-display execution condition is satisfied. Therefore, it is possible for one signal display lamp to perform a normal display and a simulated display.

In one preferred embodiment of the present invention, at least one of the plurality of signal display lamps includes input-signal accepting means for accepting an input signal, and the state information includes input information that shows an input signal accepted by the input-signal accepting means.

According to this configuration, input information corresponding to an input signal is transmitted to the simulated-display signal display lamp, and a determination is made whether the simulated-display execution condition is satisfied or dissatisfied based on the input information. Therefore, it is possible for the simulated-display signal display lamp to appropriately execute a simulated display based on input signals that are input into other signal display lamps.

In one preferred embodiment of the present invention, the display-state information concurrently serves as the state information.

According to this configuration, display-state information is transmitted to the simulated-display signal display lamp, and a determination is made whether the simulated-display execution condition is satisfied or dissatisfied based on the display-state information. Therefore, it is possible for the simulated-display signal display lamp to appropriately execute a simulated display based on display state of another signal display lamp. Moreover, it is possible to use the display-state information as it is for a simulated display, and therefore it is possible to reduce to-be-transmitted information.

For example, the simulated-display execution condition may be determined in the plurality of (for example, all) signal display lamps. In this case, for example, when a signal display lamp generates state information that shows an abnormal state (for example, input information or display-state information), the plurality of (for example, all) other signal display lamps each behave as a simulated-display signal display lamp that simulates a display state of the signal display lamp that has generated the state information of the abnormal state. Consequently, when an abnormality occurs in one signal display lamp, an anomalous occurrence is imparted by the plurality of (for example, all) other signal display lamps simultaneously. As a result, it is possible to reliably impart the anomalous occurrence to the user.

In one preferred embodiment of the present invention, the signal display lamp system further includes simulated-display-source imparting means for imparting information by which the simulated-display-source signal display lamp is identified to a user. This enables the user to recognize a display state of any of the signal display lamps being simulated, and therefore it is possible to more appropriately impart information to the user.

The present invention further provides a signal display lamp used in the signal light display system configured as above.

In detail, one preferred embodiment of the present invention provides a signal display lamp that is communicably connected to a plurality of other signal display lamps through a communication network and that simulates display state of another signal display lamp, the signal display lamp including a display portion that is capable of performing a variable display, simulated-display-source identifying means for variably identifying any of the plurality of other signal display lamps as a simulated-display-source signal display lamp whose display state is simulated in the signal display lamp, display-state-information receiving means for receiving display-state information corresponding to a display state in the display portion of a simulated-display-source signal display lamp identified by the simulated-display-source identifying means through the communication network, and display control means for controlling the display portion based on display-state information that is received by the display-state-information receiving means.

In one preferred embodiment of the present invention, the signal display lamp further includes simulated-display-source-selecting-command accepting means for accepting a simulated-display-source selecting command, and the simulated-display-source identifying means identifies a signal display lamp corresponding to a simulated-display-source selecting command accepted by the simulated-display-source-selecting-command accepting means as a simulated-display-source signal display lamp.

Additionally, in one preferred embodiment of the present invention, at least one of the plurality of other signal display lamps is configured to send state information of the other signal display lamps to the communication network, and the simulated-display-source identifying means includes simulated-display-execution determining means for determining whether the state information meets a simulated-display execution condition, and identifies a signal display lamp that has sent the state information meeting the simulated-display execution condition as a simulated-display-source signal display lamp.

Additionally, in one preferred embodiment of the present invention, the signal display lamp includes input-signal accepting means for accepting an input of an input signal, and the display control means controls the display portion in accordance with an input signal accepted by the input-signal accepting means if the simulated-display-source identifying means has not identified a simulated-display-source signal display lamp.

Additionally, in one preferred embodiment of the present invention, at least one of the plurality of other signal display lamps includes input-signal accepting means for accepting an input signal, and the state information includes input information that shows an input signal accepted by the input-signal accepting means.

Additionally, in one preferred embodiment of the present invention, the display-state information concurrently serves as the state information.

Additionally, in one preferred embodiment of the present invention, the signal display lamp further includes simulated-display-source imparting means for imparting information by which the simulated-display-source signal display lamp is identified to a user.

The aforementioned or other objects, features, and effects of the present invention will be clarified by the following description of preferred embodiments given below with reference to the accompanying drawings.

### BRIEF DESCRIPTION OF DRAWINGS

FIG. 1 is a schematic configuration view to describe a configuration example of a production system that includes a signal display lamp system according to a preferred embodiment of the present invention.
FIG. 2 is a perspective view to describe a configuration example of a signal display lamp.
FIG. 3 is a block diagram to describe an electric configuration example of the signal display lamp.
FIG. 4 shows an example of display-state information.
FIG. 5 shows an example of a mirroring-source identifying table.
FIG. 6 is a flowchart to describe an operation example of a signal display lamp (a candidate for a mirroring source) that operates according to a signal line control method.
FIG. 7 is a flowchart to describe an example of communication processing relative to selective mirroring in a signal display lamp (a candidate for a mirroring source) that operates according to the signal line control method.
FIG. 8 is a flowchart to describe an operation example of a mirroring destination signal display lamp (simulated-display signal display lamp) that operates according to a command control method in selective mirroring.
FIG. 9 is a time chart to describe communication processing between a mirroring source signal display lamp (signal line control method) and a mirroring destination signal display lamp (command control method) in selective mirroring.
FIG. 10 is a view to describe another preferred embodiment of the present invention, and shows an example of a mirroring execution condition in dynamic mirroring processing.
FIG. 11 is a flowchart to describe an example of communication processing relative to dynamic mirroring in a signal display lamp that operates according to the signal line control method.
FIG. 12 is a flowchart to describe an operation example of a signal display lamp that is set to mirror the displays of other signal display lamps in dynamic mirroring.
FIG. 13 shows another example of the mirroring execution condition.

### DESCRIPTION OF EMBODIMENTS

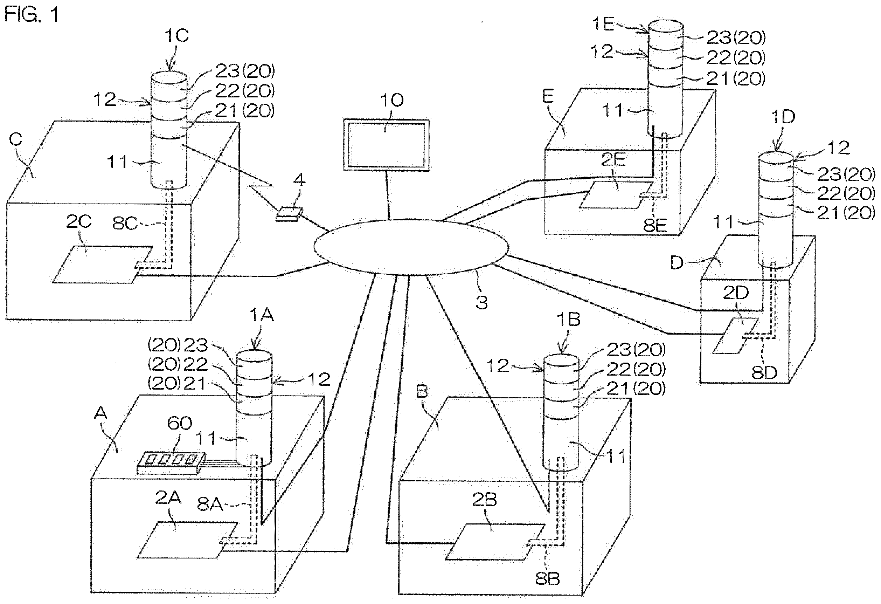

FIG. 1 is a schematic configuration view to describe a configuration example of a production system that includes a signal display lamp system according to a preferred embodiment of the present invention. The production system includes a plurality of production apparatuses (mechanical apparatuses) A, B, C, D, and E. A part of or all of these plurality of production apparatuses A, B, C, D, and E may be disposed in one factory, or may be dispersedly disposed in a plurality of factories.

The production apparatuses A, B, C, D, and E are respectively provided with signal display lamps 1A, 1B, 1C, 1D, and 1E (which are hereinafter referred to generically as a "signal display lamp 1" when necessary). A plurality of input signals (control signals) are respectively input into the signal display lamps 1A, 1B, 1C, 1D, and 1E from signal lamp control devices 2A, 2B, 2C, 2D, and 2E respectively included in the production apparatuses A, B, C, D, and E (which are hereinafter referred to generically as a "signal lamp control device 2" when necessary) through input signal lines 8A, 8B, 8C, 8D, and 8E (which are hereinafter referred to generically as an "input signal line 8" when necessary). The signal lamp control device 2 may be a programmable logic controller (PLC) that controls operations of the production apparatuses A, B, C, D, and E. The display state of the signal display lamp 1 changes in accordance with an input signal that is input from the signal lamp control device 2. The signal lamp control device 2 outputs a control signal that corresponds to the operational status of a corresponding one of the production apparatuses A, B, C, D, and E. The control signals may be signals that show, for example, the normal operations, the occurrence of missing components, the previous notice of missing components, a request to call an administrator, and the occurrence of other abnormal situations. These control signals become input signals that are input into the signal display lamp 1.

The plurality of production apparatuses A, B, C, D, and E are connected to a network 3, hence constructing a production system in which the plurality of production apparatuses A, B, C, D, and E are communicable to each other through the network 3. For example, the signal lamp control device 2 may be connected to the network 3. The network 3 may be the Internet, or may be an intranet, or may be a local area network (for example, Ethernet (registered trademark)).

On the other hand, the signal display lamps 1A, 1B, 1C, 1D and 1E are also connected to the network 3 (communication network). This brings about constructing a display lamp system including the plurality of signal display lamps 1A, 1B, 1C, 1D and 1E that are communicable to each other through the network 3. The connection between the signal display lamps 1A, 1B, 1C, 1D, and 1E and the network 3 may be a wired connection, or may be a wireless connection. If it is a wireless connection, a wireless communication device 4 may be connected to the network 3 in a wired manner, and the wireless communication device 4 and the signal display lamp 1 may be connected to each other in a wireless manner.

It is possible to connect an information-processing terminal device 10 to the network 3 when needed. The information-processing terminal device 10 may have the form and configuration of a personal computer. The information-processing terminal device 10 is capable of communicating with the signal display lamp 1 through the network 3, and hence is capable of performing various settings with respect to the operation or the like of the signal display lamp 1. More specifically, the information-processing terminal device 10 includes a web browser. A user can set the operation or the like of each signal display lamp 1 by use of the web browser.

Unique identification information (destination information) is assigned to each of the equipments connected to the network 3, i.e., is assigned to each of the production apparatuses A to E, to each of the signal display lamps 1A to IE, and to the information-processing terminal device 10, and, based on the identification information, the equipments are communicable with each other. One concrete example of the identification information is an IP address.

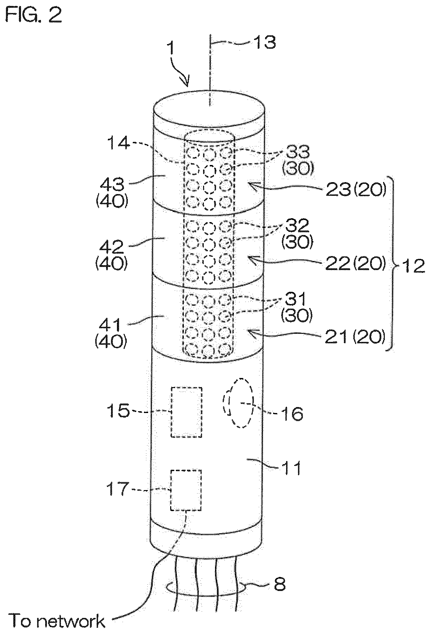

FIG. 2 is a perspective view to describe a configuration example of the signal display lamp 1. The signal display lamp 1 has a columnar basic form as a whole. The signal display lamp 1 has a base portion 11 and a display portion 12. The base portion 11 has the shape of a pillar (typically, a circularly columnar pillar), and is attached to an appropriate place of the production apparatus. The display portion 12 is joined to an upper end of the base portion 11. The display portion 12 has a pillar shape. Typically, the display portion 12 has a pillar shape (for example, a circularly columnar pillar shape) having a size and a form that match the base portion 11. In the present preferred embodiment, the display portion 12 is formed by linearly arranging a plurality of display units 21 to 23 (which are referred to generically as a "display unit 20" when necessary) in a direction along an axis 13 (for example, in an up-down direction). Each display unit 20 includes light sources 31 to 33 (which are referred to generically as a "light source 30" when necessary) that are full-color light sources or multicolor light sources capable of emitting light in a plurality of colors and cylindrical (for example, circularly cylindrical) globes 41 to 43 (which are referred to generically as a "globe 40" when necessary) covering the surroundings of the light source 30. In the present preferred embodiment, the globe 40 is colorless and translucent, and allows light emitted by the light source 30 to travel outwardly without changing its color. The globe 40 may integrally include a lens that refracts or diffuses light emitted by the light source 30 on its inner surface or outer surface. The display unit 20 forming the display portion 12 emits light outwardly, hence imparting information to its surroundings at a wide angular range.

A control unit 15, a speaker 16, and a network interface 17 are contained in the base portion 11. The network interface 17 is a communication unit (an example of a transmitting means and a receiving means) by which the signal display lamp 1 is connected to the network 3. The network interface 17 is connected to the network 3, and mediates communication between the signal display lamp 1 and the network 3. The speaker 16 is an example of an imparting means that imparts various information to a user while emitting sounds, such as alarm sounds or vocal messages.

The control unit 15 has a function to individually control luminous colors and light-turning-on/light-turning-off of each display unit 20 that is a component of the display portion 12. This enables the display portion 12 to variably display the size or position of a display area by use of a plurality of display colors. In other words, the display unit 20 is an example of a light-emission control unit.

The plurality of light sources 30 that respectively correspond to the plurality of display units 20 may be held on a wiring board 14 that extends integrally with the plurality of display units 20 over the plurality of display units 20 along the axis 13. Additionally, a corresponding light source 30 may be mounted on each of a plurality of wiring boards separated correspondingly to each display unit 20. In the example of FIG. 2, the wiring board 14 is formed in a cylindrical shape. The thus-formed cylindrical wiring board 14 may be formed by combining a plurality of long rectangular wiring boards together.

Specifically, each light source 30 may include a light emitting diode. Each light source 30 may consist of a full-color light emitting diode unit in which light emitting portions of a plurality of colors (preferably, three primary colors such as red, green, and blue) are incorporated into a single package. Alternatively, each light source 30 may include a plurality of individual light-emitting diode elements that respectively generate beams of light of a plurality of colors (preferably, three primary colors such as red, green, and blue). In either light source arranged above, it is possible to form a multicolor (or full-color) light-emission-type light source unit that is capable of emitting light of a plurality of colors by allowing a light emitting portion or a light-emitting diode element to emit light individually and singly or by allowing a plurality of light emitting portions or light-emitting diode elements to emit light together in combination.

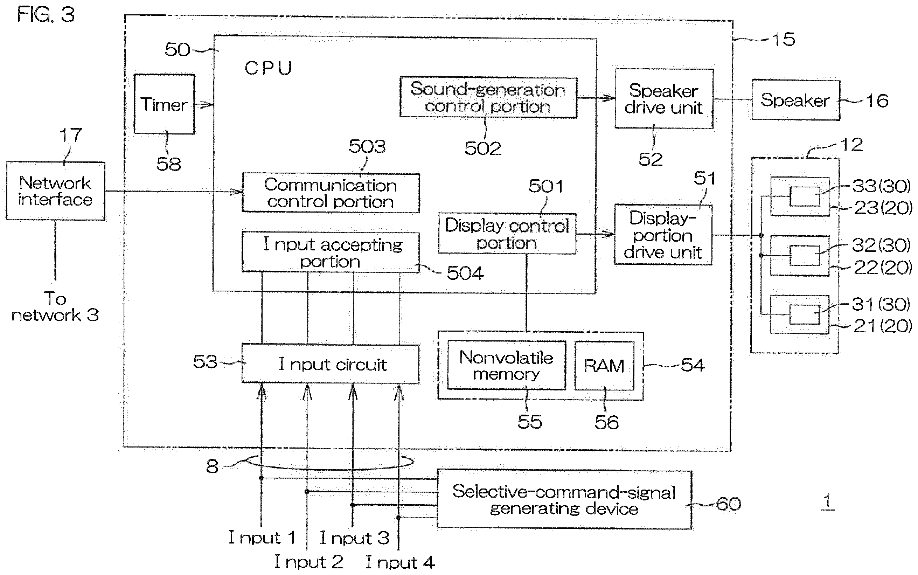

FIG. 3 is a block diagram to describe an electric configuration example of the signal display lamp 1. The signal display lamp 1 includes the display portion 12, the control unit 15, the speaker 16, and the network interface 17. The display portion 12, the speaker 16, and the network interface 17 are connected to the control unit 15, and are controlled by the control unit 15. The control unit 15 includes a CPU (central processing unit) 50 serving as a main control unit, a display-portion drive unit 51 that controls the display portion 12, a speaker drive unit 52 that drives the speaker 16, an input circuit 53, and a memory 54. The input signal line 8 is connected to the input circuit 53. The memory 54 may include a nonvolatile memory 55, such as an EEPROM (electrically erasable programmable read-only memory), and a RAM (random-access memory) 56. Execution programs that are executed by the CPU 50 and various control parameters are stored in the nonvolatile memory 55. The CPU 50 executes the execution programs stored in the nonvolatile memory 55 while using the storage area of the RAM 56 as a work area, hence functioning as a plurality of function-processing portions. The memory 54 is an example of a display-control-information storage means that stores display control information used to control the display of the display portion 12. The display control information may be stored in the nonvolatile memory 55, or may be stored in the RAM 56 (volatile memory). Preferably, display control information is stored in the nonvolatile memory 55 when the display control information should be held after a power source is shut down. Hereinafter, a case will be chiefly described in which display control information is stored in the nonvolatile memory 55.

The CPU 50 functions as a display control portion 501 (an example of a display control means) that gives a display control signal to the display-portion drive unit 51. The display-portion drive unit 51 drives the light source 30 of each display unit 20 forming the display portion 12 in accordance with a display control signal, and controls a luminous state (luminous color and light-turned-on/light-turned-off) of each light source 30. Additionally, the CPU 50 functions as a sound-generation control portion 502 that gives a sound- generation control signal to the speaker drive unit 52. The speaker drive unit 52 drives the speaker 16 in accordance with a sound- generation control signal, and generates sounds. Additionally, the CPU 50 functions as a communication control portion 503 (a transmission control portion and a reception control portion) that controls communication (i.e., transmission and reception) through the network interface 17. Still additionally, the CPU 50 functions as an input accepting portion 504 (an example of an input-signal accepting means) that accepts an input signal that is input into the input circuit 53 from the input signal line 8. These function-processing portions are based on conceptual categories, and the CPU 50 is not required to be physically divided into these function-processing portions, and, likewise, programs executed by the CPU 50 are not required to be divided into portions that correspond to the function-processing portions.

The control unit 15 additionally includes a timer 58 that measures time. The CPU 50 executes processing while referring to the time measured by the timer 58 when needed.

The signal display lamp system of the present preferred embodiment is configured so as to make it possible to perform a mirroring operation (a simulated display operation) that is an operation by which a display in another signal display lamp is simulated in a signal display lamp. For example, it is possible to set for the signal display lamp 1A (simulated-display signal display lamp) to execute a mirroring operation that performs a lighting display in the same state as in another signal display lamp (a simulated-display-source signal display lamp. For example, any one of the signal display lamps 1B to 1E). The use of such mirroring operation enables an administrator positioned near the signal display lamp 1A to know the operational state of each of the production apparatuses B to E without approaching the production apparatuses B to E. Such mirroring operation is achieved by setting the operation of the signal display lamp 1 by means of the information-processing terminal device 10.

For example, a user launches a web browser while operating the information-processing terminal device 10, and performs operations on the web browser, thus making it possible to perform various settings for the signal display lamps 1A to 1E.

The signal display lamp 1 is capable of performing control-method switching between a signal-line control method in which a display operation is executed in accordance with the input of the input signal line 8 and a command control method in which a display operation is executed in accordance with information (a control command) given from the network 3. The use of the information-processing terminal device 10 enables the user to determine and set whether each signal display lamp 1 follows the signal-line control method or the command control method. When a mirroring operation is set, the signal display lamp 1 (for example, the signal display lamps 1B to IE) on the to-be-simulated side (mirroring source) where a display state is simulated is set at the signal-line control method. The signal display lamp 1 (for example, the signal display lamp 1A) on the simulating side (mirroring destination) where it simulates a display state is set at the command control method.

In the signal display lamp 1 in which the signal-line control method has been set, the CPU 50 responds to an input signal (control signal) input into the input circuit 53 from the input signal line 8, and reads display control information corresponding to the input signal from the nonvolatile memory 55. The CPU 50 gives a display control signal corresponding to the display control information to the display-portion drive unit 51. As a result, the display portion 12 reaches a display state (luminous state) according to an input signal that is input from the input signal line 8. The display control information is control information in which the input, an input signal from the input signal line 8, is correlated with the display state of the display portion 12.

In the signal display lamp 1 in which the command control method has been set, the CPU 50 does not execute an operation that changes the display state of the display portion 12 in response to an input signal (control signal) that is input into the input circuit 53 from the input signal line 8, and, instead, executes an operation that reflects display-state information obtained through the network interface 17 in the display state of the display portion 12. In detail, when display-state information is obtained from the network interface 17, the CPU 50 gives a display control signal corresponding to the display-state information to the display-portion drive unit 51. As a result, the display portion 12 reaches a display state (luminous state) according to the display-state information given from the network 3. In the command control method, the signal display lamp 1 simulates the display state of one other signal display lamp 1, and therefore, preferably, for example, the CPU 50 drives the speaker 16, and allows the speaker 16 to generate a sound (for example, a message or the like) that imparts information as to any of the signal display lamps 1 whose display state is being simulated.

The user presets display control information for each signal display lamp 1. In other words, display control information is stored in the nonvolatile memory 55 of each signal display lamp 1. Display control information shared between a part of or all of the signal display lamps 1 may be set, or display control information individually unique to each signal display lamp 1 may be set. It is possible to achieve the display-control-information setting by transmitting display control information from the information-processing terminal device 10 to each signal display lamp 1 through the network 3 and by allowing the CPU 50 of each signal display lamp 1 to accept and write the display control information into the nonvolatile memory 55. Instead of such processing, display control information may be preset for each signal display lamp 1 without using the network 3. For example, an external connection interface may be provided in the signal display lamp 1, and display control information may be set by using the external connection interface. The external connection interface may be a USB interface. For example, display control information may be read from a USB memory that stores display control information through the operation of the CPU 50 by connecting the USB memory to the USB interface, and the display control information may be written to the nonvolatile memory 55.

For example, when each display unit 20 is a full-color display unit that is capable of performing a full color display, display control information includes color data for the full color display. Specifically, display control information includes three-primary-color data of a plurality of gradations. More specifically, display control information may include red data of 16 gradations, green data of 16 gradations, and blue data of 16 gradations. As a matter of course, the number of gradations is one example, and three-primary-color data in which the brightness of each color may be represented by 256 gradations.

Display-state information given from a mirroring source to a mirroring destination in mirroring may be data having the same form as display control information, or may be data having another form.

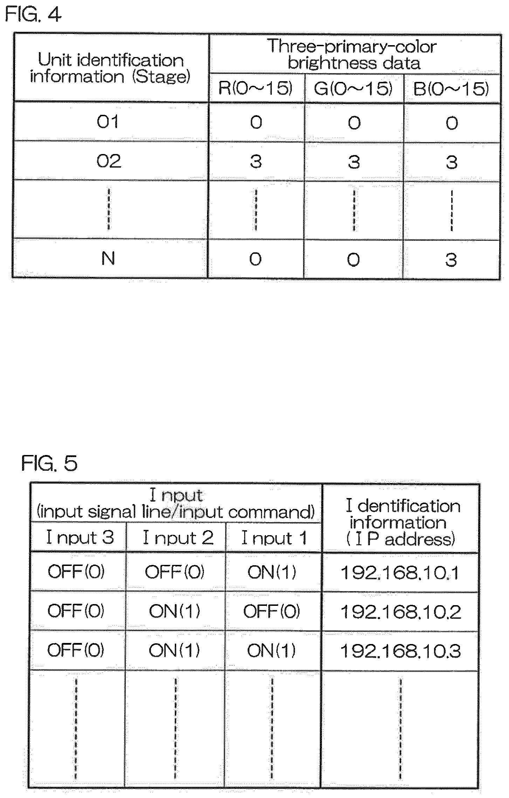

FIG. 4 shows an example of display-state information. Herein, an example of display-state information having the same data format as display control information is shown. The display-state information of this example is information that represents the lighting color of the display unit 20 of each stage of the display portion 12. More specifically, the display-state information of this example includes red brightness data (R), green brightness data (G), and blue brightness data (B) with respect to a first stage display unit 20 to an N-th stage display unit 20 (N is the number of display units 20 of the signal display lamp 1). In other words, display-state information is expressed by a group of unit identification information to identify the display units 20 of the respective stages and brightness data R, G, and B of each color. In this example, brightness data R or G or B of each color represents brightness of each color with 16 gradations of from 0 to 15.

If the display unit 20 is not a full-color display unit but a multicolor unit in which limitations are more rigidly imposed on display colors, the information quantity of display-state information becomes smaller. For example, the light source 30 of the display unit 20 may be configured to have a red light emitting diode, a blue light emitting diode, and a green light emitting diode and to achieve the display of a plurality of colors (eight colors including a light-turned-off state) by individually turning them on/off. In this case, red data (R), green data (G), and blue data (B) can express the display state of the display unit 20 of each stage by means of one-bit data (three bits in total) each that represents On/Off of the light emitting diode of each color. If the light source 30 of the display unit 20 is a monochromatic light source and if it is merely turned on/off, the display-state information of the display unit 20 of each stage becomes one-bit data.

In a signal display lamp 1 (for example, the signal display lamp 1A), when the display of one other signal display lamp 1 is mirrored, it is possible to select the other signal display lamp 1 (mirroring source) from among a plurality of signal display lamps 1 connected to the network 3 in the present preferred embodiment. Such mirroring is hereinafter referred to as "selective mirroring."

In selective mirroring, in the signal display lamp 1 (mirroring destination) in which the command control method has been set, the CPU 50 handles an input signal that is input from the input signal line 8 through the input circuit 53 as a mirroring-source selecting command to select the mirroring source signal display lamp 1. In other words, in this case, the input accepting portion 504 functions as a simulated-display-source-selecting-command accepting means that accepts a mirroring-source selecting command (simulated-display-source selecting command) that selects a mirroring source signal display lamp 1 (simulated display source).

For example, in a case in which the signal display lamp 1A is used as a mirroring destination signal display lamp, the signal display lamp 1A is separated from the signal lamp control device 2A, and, instead, a selective-command-signal generating device 60 (see FIGS. 1 and 3) (an example of a simulated-display-source-selecting-command generating means) is connected to the input signal line 8 of the signal display lamp 1A. The selective-command-signal generating device 60 is a device that inputs an on/off signal, which is a selective command signal, into the input signal line 8, and may be a switch unit, or may be an information processing device such as a computer.

A mirroring-source identifying table that represents a correspondence relationship between an input signal (mirroring-source selecting command) and an identification information that identifies the mirroring source signal display lamp 1 is beforehand registered in the memory 54 (preferably, the nonvolatile memory 55). It is possible to register the mirroring-source identifying table from the information-processing terminal device 10.

An example of the mirroring-source identifying table is shown in FIG. 5. A concrete example of identification information is an IP address of the signal display lamp 1 that can be a mirroring source. The IP address is unique identification information given to all equipments (which include the signal display lamp 1 and the information-processing terminal device 10) connected to the network 3, when the network 3 is constructed.

When a selective command signal, which is a mirroring-source selecting command, is given from the selective-command-signal generating device 60 through the input signal line 8, the CPU 50 is capable of obtaining an IP address corresponding thereto by referring to the mirroring-source identifying table (see FIG. 5). Thereafter, the CPU 50 is capable of sending a display-state information acquisition request through the network interface 17 while using the IP address as a destination.

The signal display lamp 1 (mirroring source) in which the signal-line control method has been set is given the display-state information acquisition request from the a mirroring destination signal display lamp 1 through the network 3. In response thereto, the CPU 50 of the mirroring destination signal display lamp 1 allows display-state information that represents a present display state of the display portion 12 to be transmitted from the network interface 17. In other words, the CPU 50 (communication control portion 503) and the network interface 17 are an example of a display-state-information transmitting means that transmits display-state information from the mirroring source to the mirroring destination.

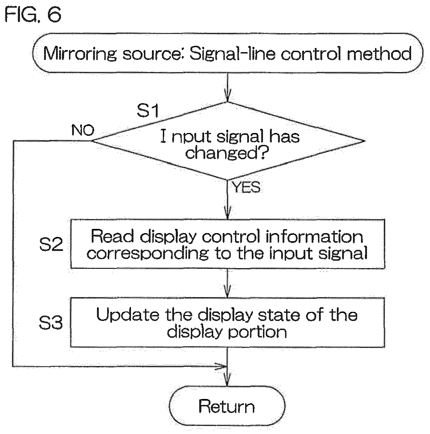

FIG. 6 is a flowchart to describe an operation example of the signal display lamp 1 (a candidate for a mirroring source) that operates according to the signal-line control method. This operation is repeatedly performed at predetermined control intervals. The CPU 50 determines whether an input signal that is input into the input circuit 53 has changed with reference to the input signal (step S1). If the input signal has changed (step S1: YES), the CPU 50 reads display control information corresponding to the input signal from the nonvolatile memory 55 (step S2). A display control signal corresponding to the display control information is given to the display-portion drive unit 51. The display portion 12 thus reaches a display state corresponding to the input signal (step S3). If the input signal has not changed, a previous display state is maintained.

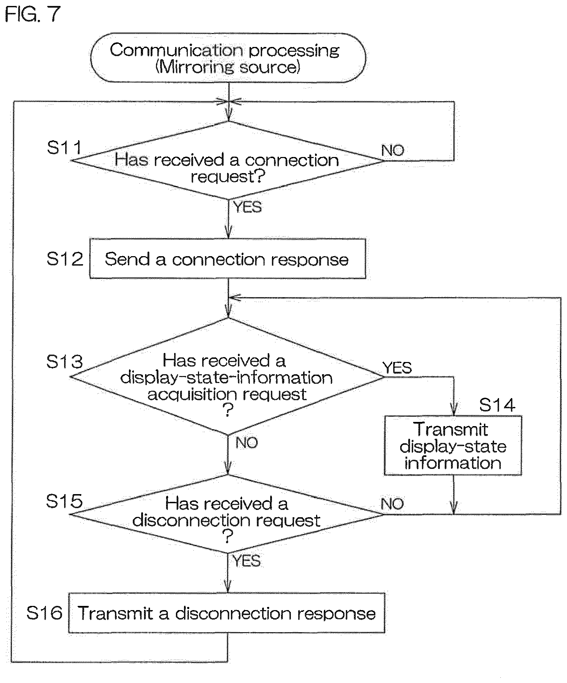

FIG. 7 is a flowchart to describe an example of communication processing relative to selective mirroring in a signal display lamp (a candidate for a mirroring source) that operates according to the signal line control method. The CPU 50 stands ready for a connection request that is given from the mirroring destination signal display lamp 1 through the network interface 17 (step S11). An IP address of the mirroring destination is included in the connection request. When the CPU 50 receives the connection request (step S11: YES), the CPU 50 makes a connection response to the mirroring destination signal display lamp 1 (step S12), hence establishing a connection.

Furthermore, the CPU 50 stands ready for a display-state information acquisition request from the mirroring destination (step S13). When the CPU 50 receives the display-state information acquisition request (step S13: YES), the CPU 50 sends display-state information that represents a display state of the display portion 12 of its signal display lamp 1 to a destination that coincides with the IP address of the signal display lamp 1 that is the mirroring destination (step S14). Thereafter, the process returns to step S13, where the CPU 50 stands ready for a display-state information acquisition request.

If the CPU 50 has not received the display-state information acquisition request (step S13: NO), the CPU 50 determines whether a disconnection request has been given from the mirroring destination signal display lamp 1 (step S15). If a disconnection request has not been given (step S15: NO), the process returns to step S13. When the CPU 50 receives the disconnection request (step S15: YES), the CPU 50 makes a disconnection response (step S16), thus disconnecting a connection with the mirroring destination signal display lamp 1. Thereafter, the process returns to step S11, where the CPU 50 stands ready for a connection request.

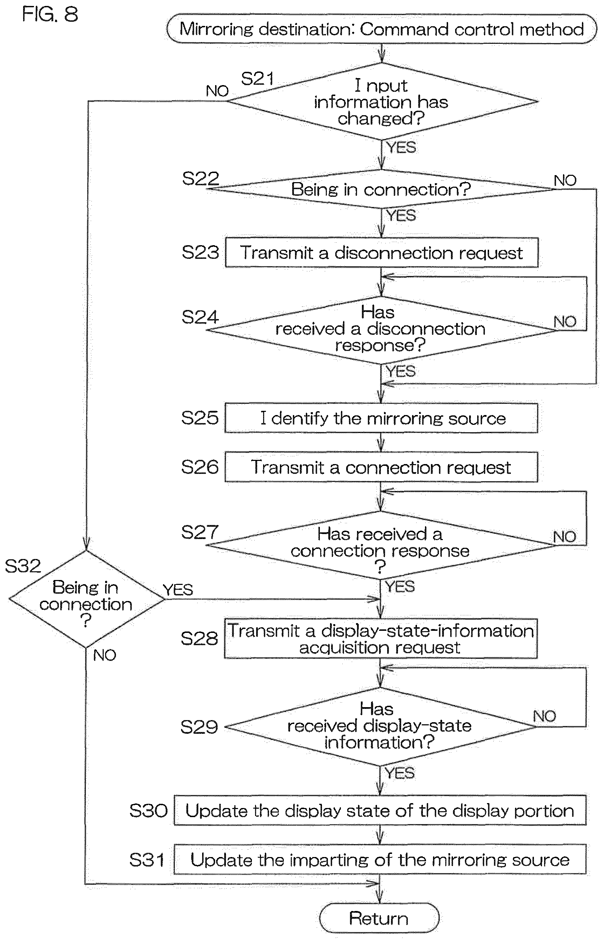

FIG. 8 is a flowchart to describe an operation example of a mirroring destination signal display lamp (simulated-display signal display lamp) that operates according to the command control method in selective mirroring. In the mirroring destination signal display lamp 1, this processing is repeatedly performed periodically (for example, every 100 milliseconds).

The CPU 50 determines whether there has been a change in the input signal (selective command signal) from the input signal line 8 (step S21). If there has been a change in the input signal (step S21: YES), the CPU 50 determines whether a connection with the other signal display lamps 1 is being continued for selective mirroring (step S22). If it is being continued (step S22: YES), a disconnecting process is performed. In other words, the CPU 50 sends a disconnection request to the other signal display lamps 1 through the network interface 17 (step S23), and receives a response thereto (step S24). If a connection with the other signal display lamps 1 is not being continued (step S22: NO), the disconnecting process (steps S23 and S24) is skipped.

Based on the input signal that has undergone a change, the CPU 50 identifies the mirroring source while referring to the mirroring-source identifying table (see FIG. 5) (step S25), and reads corresponding destination information (IP address). Thereafter, the CPU 50 sends a connection request to the destination (step S26). If the CPU 50 receives the connection response from the destination, and if a connection is established (step S27: YES), the CPU 50 sends a display-state-information acquisition request to the destination (step S28). If display-state information is received through the network interface 17 correspondingly thereto (step S29: YES), the CPU 50 gives a display control signal corresponding to the display-state information to the display-portion drive unit 51. Accordingly, the display portion 12 is controlled so as to reach a display state corresponding to the display-state information received therefrom (step S30). Consequently, the display portion 12 reaches a display state that has simulated the signal display lamp 1 identified (selected) by the input signal that has undergone a change.

Furthermore, the CPU 50 allows the speaker 16 to generate a sound denoting which of the signal display lamps 1 is being mirrored, and imparts the information of the mirroring source (step S31. Simulated-display-source imparting means). For example, the CPU 50 may give a sound- generation control signal to issue a vocal message, such as "A state of the signal display lamp *** is being displayed," to the speaker drive unit 52. The mirroring source signal display lamp 1 may be imparted by a display of the display portion 12. For example, it is permissible to impart the fact that mirroring is being performed and which is the mirroring source signal display lamp 1 by blinking a part of or all of the display units 20 of the display portion 12 by times that represent the mirroring source signal display lamp 1.

If there has not been a change in the input signal (step S21: NO), the CPU 50 determines whether a connection with any of the signal display lamps 1 is being continued for mirroring (step S32). If a connection therewith is being continued, the process proceeds to step S28, where a display-state-information acquisition request is sent to that signal display lamp 1. In this case, a mirroring operation is performed while maintaining the mirroring source as the same signal display lamp 1. If a connection with any of the signal display lamps 1 is not being continued (step S32: NO), processing during the present cycle is finished.

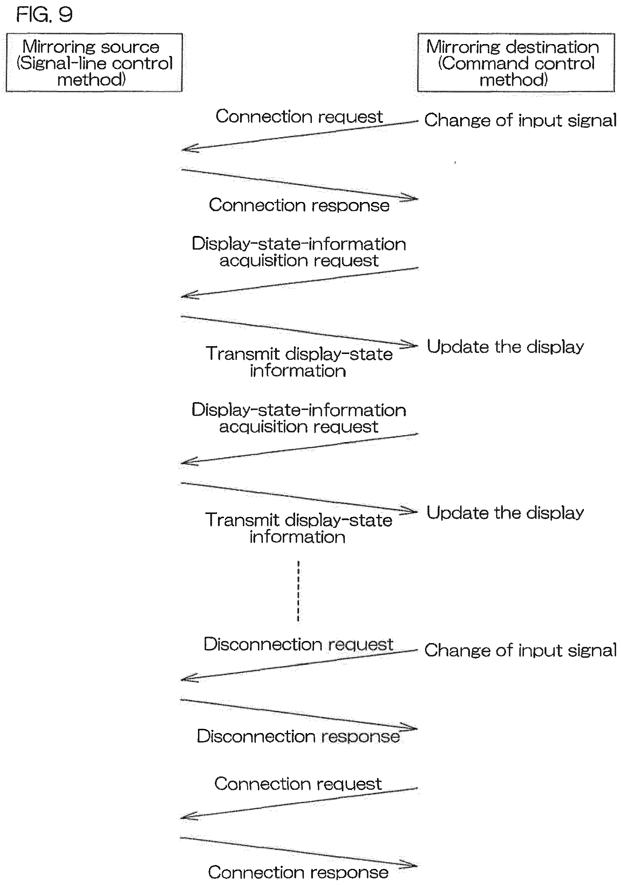

FIG. 9 is a time chart to describe communication processing between a mirroring source signal display lamp (signal line control method) and a mirroring destination signal display lamp (command control method) in selective mirroring. When an input signal (selective command signal) into the input signal line 8 changes, the mirroring destination signal display lamp 1 (simulated-display signal display lamp) acquires an IP address of the mirroring source signal display lamp 1 (simulated-display-source signal display lamp) that corresponds to the input signal from the mirroring-source identifying table (see FIG. 5). Thereafter, a connection request is sent to the signal display lamp 1 having the IP address. In response thereto, the mirroring source signal display lamp 1 makes a connection response, thus establishing a connection. Thereafter, the mirroring destination signal display lamp 1 transmits a display-state-information acquisition request to the mirroring source at regular intervals (periodically) as long as the input signal of the mirroring destination signal display lamp 1 does not change. In response to the display-state-information acquisition request, the mirroring source signal display lamp 1 transmits display-state information that shows the display state of the display portion 12 at that time to the mirroring destination signal display lamp 1. Consequently, the signal display lamp 1 of the mirroring destination mirrors the display state of the mirroring source signal display lamp 1.

When an input signal (selective command signal) input into the mirroring destination signal display lamp 1 changes, the mirroring destination signal display lamp 1 transmits a disconnection request to the mirroring source, and the mirroring source signal display lamp 1 makes a disconnection response. Consequently, the communication is disconnected. Thereafter, the mirroring destination signal display lamp 1 performs the same communication processing with one other signal display lamp 1 corresponding to the input signal (selective command signal) that has undergone a change, and mirrors the display state of the other signal display lamp 1.

According to the present preferred embodiment as thus described, it is possible to perform mirroring between the signal display lamps 1 communicably connected together through the network 3. For example, if the signal display lamp 1A is set as a mirroring destination and if the signal display lamp 1E is selected as a mirroring source, the user (for example, administrator) positioned near the signal display lamp 1A is able to ascertain the display state of the distant signal display lamp 1E, which is unable to be directly visually perceived, by watching the display state of the nearby signal display lamp 1A. Therefore, it is possible to grasp the operational status of the production apparatus E without moving close to the production apparatus E. Furthermore, the signal display lamp 1 is configured so that its lighting state is able to be watched from somewhat afar, and, besides, a direction in which information is imparted by light emission covers a wide range around the signal display lamp 1. Therefore, the user is able to watch the signal display lamp 1A from a wide range around the signal display lamp 1A, and hence is able to occupy a free position, and, according to circumstances, is also able to ascertain the display state of the signal display lamp 1A while being engaged in another operation. This makes it possible to provide a signal display lamp system that is excellent in convenience.

Additionally, in the present preferred embodiment, it is possible to select a mirroring source signal display lamp 1, for example, by means of an input signal (selective command signal) given to the input signal line 8 of the signal display lamp 1A. In other words, it is possible to change the mirroring source signal display lamp 1. As a result, the signal display lamp 1A enables any of the plurality of other signal display lamps 1B to 1E to be displayed while being selectively mirrored. Therefore, it is possible to allow the signal display lamp 1A to display the states of the plurality of signal display lamps 1B to 1E selectively when needed. Therefore, it is possible to provide a signal display lamp system that is excellent in convenience.

The mirroring source signal display lamp 1 is not necessarily required to be selected by a selective command signal that is input from the input signal line 8. For example, a selective command to select the mirroring source signal display lamp 1 may be given to the signal display lamp 1A from the information-processing terminal device 10 through the network 3 (another example of the simulated-display-source-selecting-command generating means). In this case, the signal display lamp 1A is not required to be separated from the signal lamp control device 2A of the production apparatus A.

Additionally, one of the plurality of signal display lamps 1 may give a mirroring-source signal display lamp selective command to one other signal display lamp 1 through the network 3 (another example of the simulated-display-source-selecting-command generating means). For example, a selective command that is issued by each signal display lamp 1 and that denotes the fact that the signal display lamp itself is a mirroring source may be given to one other signal display lamp 1 or to a plurality (for example, all) of other signal display lamps 1 through the network 3. More specifically, the program of the control unit 15 may be configured such that the CPU 50 of each signal display lamp 1 to has a mirroring-execution determining function to determine whether its state (for example, an input-signal state or a display state) meets a mirroring execution condition. For example, the mirroring execution condition may include the fact that an input signal from a corresponding production apparatus is the content of a command to display an abnormal state. When the thus-established mirroring execution condition is satisfied, the CPU 50 of the signal display lamp 1 may generate a selective command to the effect that mirroring should be executed under the condition that the signal display lamp itself is a mirroring source, and may give it to all other signal display lamps 1 through the network 3. In response thereto, all other signal display lamps 1 are changed into the command control method, and an abnormal-state display is started by mirroring in which the signal display lamp 1 that has generated the selective command is set as a mirroring source. Thus, the occurrence of an abnormal state is imparted by all signal display lamps 1 simultaneously. As a result, it is possible to impart the occurrence of an abnormal state to the user reliably and swiftly. Likewise, in this case, it is preferable for the signal display lamp 1 (command control method) that is executing a mirroring operation to impart information that identifies the mirroring source to surroundings by means of a sound generated by the speaker 16 or by means of a display performed by the display portion 12.

Next, a second preferred embodiment of the present invention will be described. In the description of the present preferred embodiment, reference is again made to FIG. 1 to FIG. 6 mentioned above. It should be noted that, in the present preferred embodiment, the selective-command-signal generating device 60 shown in FIG. 1 and FIG. 3 is not needed, and the signal display lamp 1A may be as it is connected to the signal lamp control device 2A of the production apparatus A.

In the present preferred embodiment, the signal display lamp 1 that executes mirroring acquires input information that corresponds to input signals to the other signal display lamps 1 or acquires display-state information that shows input states of the other signal display lamps 1 through the network 3. If the input information or the display-state information acquired thereby meets a predetermined mirroring execution condition, the display of the signal display lamp 1 meeting the condition is mirrored. Such mirroring is hereinafter referred to as "dynamic mirroring."

The signal display lamp 1 (mirroring destination) that executes dynamic mirroring may operate according to the signal-line control method, for example, at a normal time. In other words, the CPU 50 refers to display control information based on an input signal that is input from the input signal line 8, and gives a display control signal corresponding to the display control information to the display-portion drive unit 51. On the other hand, if input information or display-state information that is acquired from one other signal display lamp 1 meets a predetermined mirroring execution condition (simulated-display execution condition), the CPU 50 responds thereto, and changes the control method to the command control method. Thereafter, the CPU 50 executes a mirroring operation in which the operation of the other signal display lamp 1 is simulated and displayed on the display portion 12.

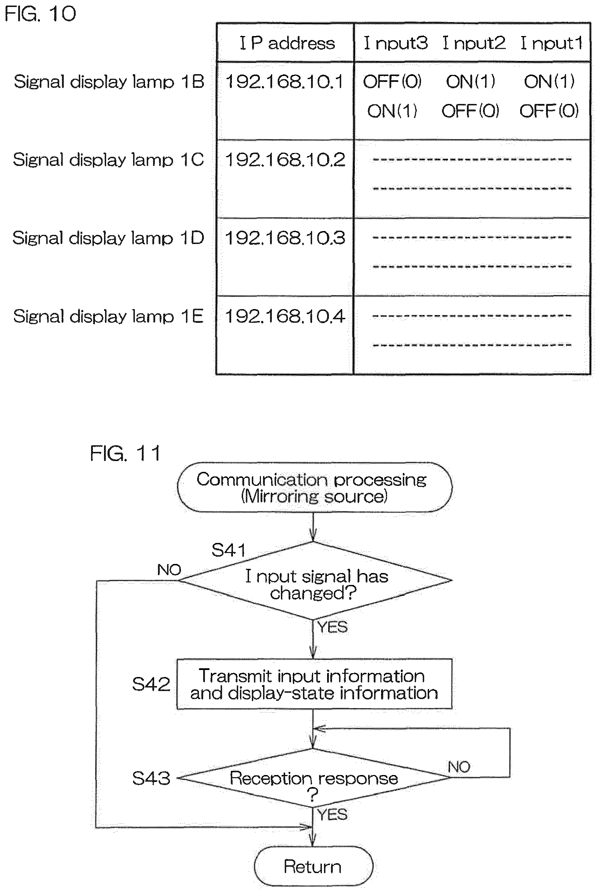

The mirroring execution condition is preset by use of, for example, the information-processing terminal device 10. An example of the mirroring execution condition is shown in FIG. 10. This example is a mirroring execution condition to perform the mirroring of the signal display lamps 1B to 1E in the signal display lamp 1A, and is beforehand registered in, for example, the memory 54 (preferably, the nonvolatile memory 55) of the signal display lamp 1A. The mirroring execution conditions are set for respective identification information (IP addresses) of the signal display lamps 1B to IE, respectively. The mirroring execution condition is prescribed by a combination of three on/off inputs 1 to 3 that form input signals (input information) input from the input signal line 8.

When the signal display lamps 1B to 1E operate according to the signal-line control method, these signal display lamps 1B to 1E transmit input information that shows input signals (inputs 1 to 3) input thereto to the signal display lamp 1A. The input information may be binary data in which the on/off of the inputs 1 to 3 is represented by "1" and "0."

The CPU 50 of the signal display lamp 1A collates those input information with the mirroring execution conditions, and, if the input information meet any of the mirroring execution conditions, the method is changed to the command control method. Thereafter, the CPU 50 of the signal display lamp 1A acquires display-state information from the signal display lamp 1 that satisfies the mirroring execution condition, and gives a display control signal by which a display state corresponding to the display-state information is realized in the display portion 12 to the display-portion drive unit 51. As a result, the display state of the signal display lamp 1 satisfying the mirroring execution condition is simulated in the signal display lamp 1A.

The mirroring execution condition can also be prescribed by use of display-state information, and can also be prescribed by use of state information (information showing the state of the signal display lamp) that differs from both the input information and the display-state information.

An operation to perform a variable display of the display portion 12 in response to an input signal in the signal display lamp 1 using the signal-line control method is the same as in the first preferred embodiment mentioned above (see FIG. 6). On the other hand, communication processing in the signal display lamp 1 (a candidate for a mirroring source. For example, the signal display lamps 1B to 1E) that uses the signal-line control method differs from communication processing performed in the first preferred embodiment (see FIG. 7), and therefore this will be described.

FIG. 11 is a flowchart to describe an example of communication processing relative to dynamic mirroring in the signal display lamp 1 (for example, signal display lamps 1B to 1E, each of which is a candidate for a mirroring source) that operates according to the signal line control method. The user presets identification information (for example, IP address) of the mirroring destination signal display lamp 1 (for example, signal display lamp 1A) for the signal display lamp 1 (for example, signal display lamps 1B to 1E) that becomes a candidate for a mirroring source by use of the information-processing terminal device 10. The CPU 50 of the signal display lamp 1 (for example, signal display lamps 1B to 1E) that becomes a candidate for a mirroring source repeatedly performs the communication processing of FIG. 11 during every control cycle.

In detail, the CPU 50 monitors whether a change has occurred in the input signal (step S41), and, if there is no change from the previous control cycle (step S41: NO), processing for the present control cycle is ended. If a change has occurred in the input signal (step S41: YES), the CPU 50 transmits input information that shows the input signal that has undergone a change and display-state information that shows a display state corresponding to the input signal that has undergone a change to an IP address of the signal display lamp 1 (for example, signal display lamp 1A) that has been set as a mirroring destination, through the network interface 17 (step S42). Thereafter, the CPU 50 receives a reception response from the mirroring destination signal display lamp 1 (for example, signal display lamp 1A) (step S43), hence ending the processing for the present control cycle.

For example, when various settings (for example, setting for a mirroring destination) created by the information-processing terminal device 10 are changed, the CPU 50 sends a disconnection request to the present mirroring destination through the network interface 17, then receives a disconnection response from the mirroring destination, and disconnects a connection with the mirroring destination (not shown).

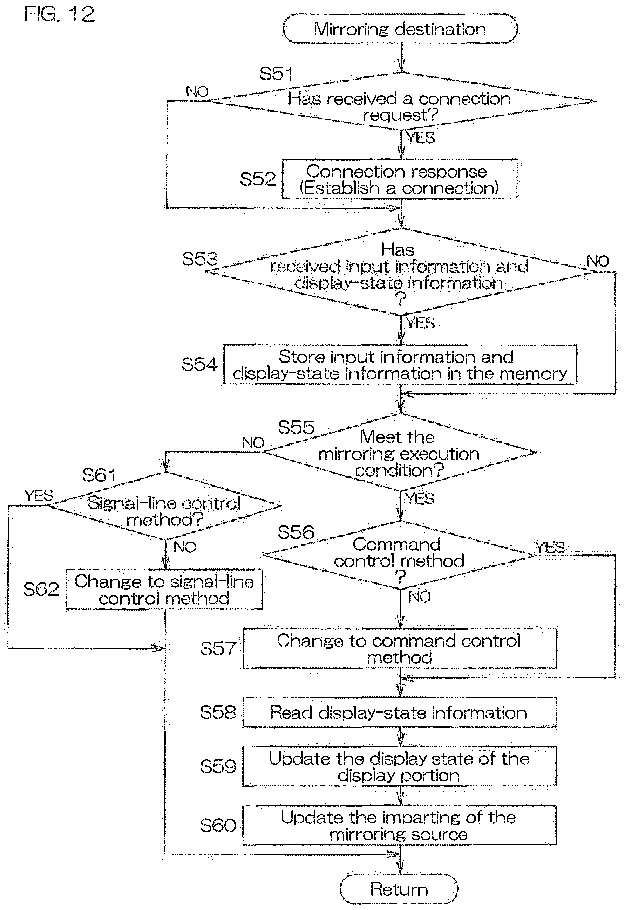

FIG. 12 is a flowchart to describe an example of an operation repeatedly performed during every control cycle by the signal display lamp 1 (for example, signal display lamp 1A) that has been set to mirror the displays of the other signal display lamps 1 (for example, signal display lamps 1B to 1E) in dynamic mirroring.

The signal display lamp 1A may operate according to the signal-line control method, for example, without performing mirroring at a normal time. The signal display lamp 1A may perform the operation shown in FIG. 6 and FIG. 11 mentioned above during that time. In other words, the signal display lamp 1A may also be a candidate for a mirroring source whose display state is simulated in the other signal display lamps 1.

On the other hand, in the signal display lamp 1A that has been set to mirror the displays of the other signal display lamps 1, the CPU 50 accepts connection requests from the other signal display lamps 1, and, if there is a connection request (step S51: YES), the CPU 50 makes a connection response (step S52), and establishes a connection with the other signal display lamps 1. The signal display lamp 1A accepts connection requests from the plurality of other signal display lamps 1, and communicates in parallel with the plurality of other signal display lamps 1. If input information and display-state information are sent from the other signal display lamps 1 with each of which a connection has been established, the CPU 50 of the signal display lamp 1A receives those information (step S53), and stores them in the memory 54 (for example, RAM 56) (step S54). Furthermore, the CPU 50 collates the input information stored in the memory 54 with the mirroring execution condition (step S55. Simulated-display-execution determining means). If input information received from any of the signal display lamps 1 with which a connection has been established meets the mirroring execution condition (step S55: YES), the CPU 50 changes its control method from the signal-line control method to the command control method (step S57). If it has already operated according to the command control method (step S56: YES), this process is excluded. Thereafter, the CPU 50 reads display-state information received together with the input information meeting the mirroring execution condition from the memory 54 (step S58), and generates and supplies a corresponding display control signal to the display-portion drive unit 51. Consequently, a display that simulates the display of the signal display lamp 1 that has generated input information meeting the mirroring execution condition is made (step S59). Furthermore, the CPU 50 executes an imparting process to impart information that identifies which one other signal display lamp 1 is simulated a display in the display portion 12 (step S60). This imparting process may be a process for generating a vocal message from the speaker 16. If so, the CPU 50 supplies a sound- generation control signal corresponding to the vocal message to the speaker drive unit 52. The imparting process can also be performed by use of the display portion 12. For example, a part of or all of the display portion 12 may be blinked, and information as to the signal display lamp 1 that is being mirrored may be imparted by the number of times of blinking. In this case, the CPU 50 supplies a display control signal for its blinking display to the display-portion drive unit 51.

If input information that has been input from any of the signal display lamps 1 with which a connection has been established and that has been stored in the memory 54 does not meet the mirroring execution condition (step S55: NO), the control method is set at the signal-line control method (step S62), and the processing during the present control cycle is ended. If the present control method is the signal-line control method (step S61: YES), the control method is maintained as it is without being changed.

If the CPU 50 receives a disconnection request from any of the signal display lamps 1, the CPU 50 sends a disconnection response from the network interface 17, and disconnects the connection with the signal display lamp 1 (not shown).

For example, let a case be supposed in which the signal display lamp 1E is given an input signal that indicates an anomalous occurrence from a corresponding production apparatus E and in which a display of the signal display lamp 1E is mirrored by the signal display lamp 1A. In this case, if the user deals with an abnormality of the production apparatus E, and solves its abnormality, and clears an abnormal imparting state, the input signal with respect to the signal display lamp 1E will not be a value representing an anomalous occurrence. As a result, the input information given from the signal display lamp 1E to the signal display lamp 1A will not meet the mirroring execution condition. In this case, the signal display lamp 1A comes out of a state of mirroring the signal display lamp 1E. If input information from any of the other signal display lamps 1 does not meet the mirroring execution condition, the signal display lamp 1A returns to the operation according to the signal-line control method, and performs a display according to an input signal sent from the input signal line 8A connected to the signal display lamp itself.

In addition, there is a conceivable case in which, when input information received from any of the signal display lamps 1 meets the mirroring execution condition and when the signal display lamp 1A is mirroring the display of the signal display lamp 1, input information subsequently received from the other signal display lamps 1 has come to meet the mirroring execution condition. In this case, the display portion 12 may perform a display corresponding to display-state information received from the other signal display lamps 1, and the fact that the mirroring source has changed may be imparted to the user by means of a sound generated from the speaker 16 or by means of a display in the display portion 12. In other words, the signal display lamp 1 in which input information has met the mirroring execution condition at the last becomes a mirroring source. Alternatively, all signal display lamps 1 in which input information meets the mirroring execution condition may be set as mirroring sources, respectively, and the signal display lamp 1A may perform mirroring while switching among the mirroring sources with fixed time intervals. Likewise, in this case, the mirroring source may be imparted to the user by means of a sound generated from the speaker 16 or by means of a display in the display portion 12.

According to the present preferred embodiment, the mirroring source signal display lamp 1 is identified based on the mirroring execution condition, and the display state of the signal display lamp 1 that has generated input information meeting the mirroring execution condition is mirrored. As a result, the display state of a signal display lamp 1 dynamically selected from a plurality of signal display lamps 1 (for example, signal display lamps 1B to IE) based on the mirroring execution condition is able to be simulated by one other signal display lamp 1 (for example, signal display lamp 1A). This makes it possible to improve the convenience of the signal display lamp system.

Additionally, the signal display lamp 1 (for example, signal display lamp 1A) that performs mirroring follows the signal-line control method that executes a display according to an input signal that is input from the input signal line 8 at a normal time, and, when the mirroring execution condition is satisfied, undergoes switching to the command control method according to which one other signal display lamp 1 is mirrored. Therefore, it is possible to perform a normal display and a mirroring display by use of one signal display lamp 1 (for example, signal display lamp 1A).

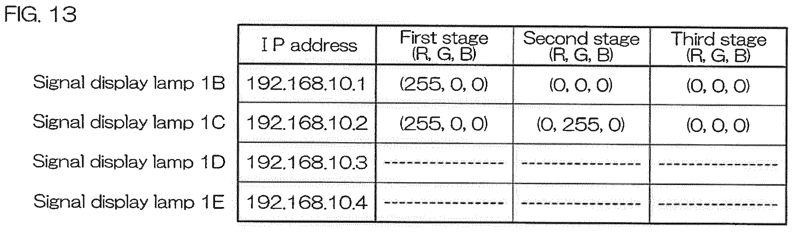

Although the mirroring execution condition is prescribed based on input information in the aforementioned example, it is also possible to prescribe the mirroring execution condition based on display-state information instead. An example of such mirroring execution condition is shown in FIG. 13. In this example, the signal display lamp 1A is a simulated-display signal display lamp that is used as a mirroring destination, and the signal display lamps 1B to 1E are candidates for simulated-display-source signal display lamps each of which can be used as a mirroring source. The mirroring execution condition is held in the memory 54 (preferably, nonvolatile memory 55) of the signal display lamp 1A. This condition corresponds to a case in which display-state information is three-primary-color brightness data of the display unit 20 of each stage of the signal display lamp 1. In this example, the three-primary-color brightness data includes red brightness data (R), green brightness data (G), and blue brightness data (B) that are each expressed by 256 gradations of from 0 to 255. The mirroring execution condition of each signal display lamp 1 is prescribed by a set of three-primary-color brightness data of the display unit 20 of each stage. Although only one condition is set as the mirroring execution condition of each signal display lamp 1 in the example of FIG. 13, a plurality of conditions may be set as the mirroring execution condition of one signal display lamp 1.

When the mirroring execution condition is thus prescribed by display-state information, its satisfaction/dissatisfaction is determined based on the display-state information. Therefore, the signal display lamps 1B to 1E are not required to transmit input information to the signal display lamp 1A, and therefore it is possible to reduce transmitted information.

Additionally, if the signal display lamps 1A to 1E share common display control information, a correspondence relationship between input information and a display state becomes common to the signal display lamps 1A to 1E. Therefore, it is possible to handle input information as information corresponding to display states of the signal display lamps 1A to IE, i.e., as display-state information. Therefore, only input information may be transmitted from the signal display lamps 1B to 1E to the signal display lamp 1A while prescribing a mirroring execution condition based on the input information. This makes it possible to determine whether the mirroring execution condition is satisfied or dissatisfied in the signal display lamp 1A, and makes it possible to mirror a display state of any of the signal display lamps 1B to 1E based on received input information.

Additionally, the signal display lamps 1B to 1E are mirrored in the single signal display lamp 1A in order to facilitate an understanding as described in the aforementioned example. However, the plurality of signal display lamps 1 may have a function serving as simulated-display signal display lamps, i.e., may have the same function as the signal display lamp 1A mentioned in the aforementioned example. For example, all signal display lamps 1A to 1E may each include a function serving as a simulated-display signal display lamp. In this case, for example, each of the signal display lamps 1A to 1E holds a mirroring execution condition relative to the signal display lamps 1 other than itself in the memory 54 (preferably, nonvolatile memory 55). Each signal display lamp 1 determines whether the other signal display lamps 1 meet the mirroring execution condition. For example, the mirroring execution condition may be set to be satisfied when any one of the signal display lamps 1 reaches a state of displaying an abnormal state. As a result, when the display of the abnormal state starts in one signal display lamp 1 (for example, signal display lamp IE), all other signal display lamps 1 (for example, signal display lamps 1A to 1D) mirror the display of the abnormal state, and reach a display state of imparting an anomalous occurrence simultaneously. This makes it possible to reliably impart the anomalous occurrence to the user.

Although the two preferred embodiments of the present invention have been described as above, the present invention can be embodied in still other modes.

For example, an information processing device for management (which may be the information-processing terminal device 10) may be connected to the network 3, and input information and/or display-state information of a part of or all of the signal display lamps 1 may be transmitted to and be registered in the information processing device for management. In this case, the mirroring destination signal display lamp 1 is capable of acquiring input information and/or display-state information of the mirroring source signal display lamp 1 through the information processing device for management. In other words, input information and/or display-state information from the mirroring source to the mirroring destination are/is transmitted through the information processing device for management. Additionally, the information processing device for management may determine the mirroring execution condition, and may give a mirroring execution command to the signal display lamp 1, or may give a selective command by which a mirroring source is selected to the mirroring destination signal display lamp 1.

Additionally, in the first preferred embodiment mentioned above, a mirroring source is selected by a selective command signal generated by the selective-command-signal generating device 60 or is selected by a selective command generated by the information-processing terminal device 10 or generated by other signal display lamps 1. However, a simulated-display signal display lamp (for example, signal display lamp 1A) itself may have a function to select a mirroring source. For example, the simulated-display signal display lamp 1A may successively and circulatorily identify the other signal display lamps 1B to 1E as mirroring sources, respectively, with fixed time intervals, and may mirror display states of those signal display lamps.

Additionally, although mirroring execution conditions (see FIG. 4 and FIG. 13) can be individually set for a plurality of signal display lamps 1 that are mirroring-source candidates in the second preferred embodiment mentioned above, a common mirroring execution condition may be applied to the plurality of signal display lamps 1 that are mirroring-source candidates instead of setting each individual mirroring execution condition for each signal display lamp 1. Likewise, in this case, the mirroring execution condition may be set to be applied to input information or, alternatively, may be set to be applied to display-state information.

Additionally, although the signal display lamps 1A to 1E are correlated with the production apparatuses A to E, respectively, as described in the above preferred embodiments, a signal display lamp only for mirroring that simulates the display states of other signal display lamps may be provided. The thus-provided signal display lamp is set at the command control method.

Additionally, although the plurality of signal display lamps 1 are connected by use of the network 3 that connects the production apparatuses A to E together as described in the above preferred embodiments, a network that connects the production apparatuses A to E together and a network that connects the plurality of signal display lamps together may, as a matter of course, be provided independently of each other.

Although the preferred embodiments of the present invention have been described in detail, these preferred embodiments are merely concrete examples used to clarify the technical contents of the present invention, and the present invention should not be understood by being limited to these concrete examples, and the scope of the present invention is limited solely by the appended claims.

### REFERENCE SIGNS LIST

- A to E: Production apparatus
- 1, 1A to 1E: Signal display lamp
- 2, 2A to 2E: Signal lamp control device
- 3: Network
- 4: Wireless communication device
- 8, 8A to 8E: Input signal line
- 10: Information-processing terminal device
- 12: Display portion
- 15: Control unit
- 16: Speaker
- 17: Network interface
- 20, 21 to 23: Display unit
- 30, 31 to 33: Light source
- 50: CPU (main control unit)
- 501: Display control portion
- 502: Sound- generation control portion
- 503: Communication control portion
- 504: Input accepting portion
- 51: Display-portion drive unit
- 52: Speaker drive unit
- 53: Input circuit
- 54: Memory
- 55: Nonvolatile memory
- 56: RAM
- 58: Timer
- 60: Selective-command-signal generating device

## Claims

1. A signal display lamp system in which a plurality of signal display lamps each of which includes a display portion are communicably connected together through a communication network,
the plurality of signal display lamps including:
a simulated-display signal display lamp that operates to simulate display state of another signal display lamp; and
a signal display lamp other than the simulated-display signal display lamp,
the signal display lamp system comprising:
simulated-display-source identifying means for variably identifying any of the plurality of signal display lamps except the simulated-display signal display lamp as a simulated-display-source signal display lamp whose display state is simulated in the simulated-display signal display lamp; and
display-state-information transmitting means for transmitting display-state information corresponding to a display state in the display portion of the simulated-display-source signal display lamp identified by the simulated-display-source identifying means from the simulated-display-source signal display lamp to the simulated-display signal display lamp through the communication network,
wherein the simulated-display signal display lamp includes display control means for controlling the display portion included in the simulated-display signal display lamp based on display-state information transmitted by the display-state-information transmitting means.

2. The signal display lamp system according to claim 1, further comprising simulated-display-source-selecting-command accepting means for accepting a simulated-display-source selecting command,
wherein the simulated-display-source identifying means identifies a signal display lamp corresponding to a simulated-display-source selecting command accepted by the simulated-display-source-selecting-command accepting means as a simulated-display-source signal display lamp.

3. The signal display lamp system according to claim 2, further comprising simulated-display-source-selecting-command generating means for generating the simulated-display-source selecting command.

4. The signal display lamp system according to claim 3, wherein at least one of the plurality of signal display lamps includes the simulated-display-source-selecting-command generating means.

5. The signal display lamp system according to claim 4, wherein the simulated-display-source-selecting-command generating means generates a simulated-display-source selecting command that identifies the signal display lamp including the simulated-display-source-selecting-command generating means as a simulated display source.

6. The signal display lamp system according to claim 5, wherein a signal display lamp including the simulated-display-source-selecting-command generating means includes simulated-display-execution determining means for determining whether a state of the signal display lamp meets a simulated-display execution condition, and
the simulated-display-source-selecting-command generating means generates the simulated-display-source selecting command if the state of the signal display lamp meets the simulated-display execution condition.

7. The signal display lamp system according to claim 1, wherein at least one of the plurality of signal display lamps is configured to send state information of the signal display lamp to the communication network, and
the simulated-display-source identifying means includes simulated-display-execution determining means for determining whether the state information meets a simulated-display execution condition, and identifies a signal display lamp that has sent the state information meeting the simulated-display execution condition as a simulated-display-source signal display lamp.

8. The signal display lamp system according to claim 7, wherein the simulated-display signal display lamp includes input-signal accepting means for accepting an input of an input signal, and
the display control means controls the display portion in accordance with an input signal accepted by the input-signal accepting means if the simulated-display-source identifying means has not identified a simulated-display-source signal display lamp.

9. The signal display lamp system according to claim 7 or claim 8, wherein at least one of the plurality of signal display lamps includes input-signal accepting means for accepting an input signal, and
the state information includes input information that shows an input signal accepted by the input-signal accepting means.

10. The signal display lamp system according to claim 7 or claim 8, wherein the display-state information concurrently serves as the state information.

11. The signal display lamp system according to any one of claim 1 to claim 10, further comprising simulated-display-source imparting means for imparting information by which the simulated-display-source signal display lamp is identified to a user.

12. A signal display lamp that is communicably connected to a plurality of other signal display lamps through a communication network and that simulates display state of another signal display lamp, the signal display lamp comprising:
a display portion that is capable of performing a variable display;
simulated-display-source identifying means for variably identifying any of the plurality of other signal display lamps as a simulated-display-source signal display lamp whose display state is simulated in the signal display lamp;
display-state-information receiving means for receiving display-state information corresponding to a display state in the display portion of a simulated-display-source signal display lamp identified by the simulated-display-source identifying means through the communication network; and
display control means for controlling the display portion based on display-state information that is received by the display-state-information receiving means.

13. The signal display lamp according to claim 12, further comprising simulated-display-source-selecting-command accepting means for accepting a simulated-display-source selecting command,
wherein the simulated-display-source identifying means identifies a signal display lamp corresponding to a simulated-display-source selecting command accepted by the simulated-display-source-selecting-command accepting means as a simulated-display-source signal display lamp.

14. The signal display lamp according to claim 12, wherein at least one of the plurality of other signal display lamps is configured to send state information of the other signal display lamps to the communication network, and
the simulated-display-source identifying means includes simulated-display-execution determining means for determining whether the state information meets a simulated-display execution condition, and identifies a signal display lamp that has sent the state information meeting the simulated-display execution condition as a simulated-display-source signal display lamp.

15. The signal display lamp according to claim 14, comprising input-signal accepting means for accepting an input of an input signal,
wherein the display control means controls the display portion in accordance with an input signal accepted by the input-signal accepting means if the simulated-display-source identifying means has not identified a simulated-display-source signal display lamp.

16. The signal display lamp according to claim 14 or claim 15, wherein at least one of the plurality of other signal display lamps includes input-signal accepting means for accepting an input signal, and
the state information includes input information that shows an input signal accepted by the input-signal accepting means.

17. The signal display lamp according to claim 14 or claim 15, wherein the display-state information concurrently serves as the state information.

18. The signal display lamp according to any one of claim 12 to claim 17, further comprising simulated-display-source imparting means for imparting information by which the simulated-display-source signal display lamp is identified to a user.
